# DEMANDE DE BREVET EUROPEEN

(11) **EP 1 645 189 A1**
(43) Date de publication de la demande: **12.04.2006**
(21) Numéro de dépôt: 05292043.6
(22) Date de dépôt: 30.09.2005
(51) Int. Cl.: A22B 5/06

(54) **Chariot a galet integrant un moyen d'identification**

(30) Priorité: 08.10.2004 FR 0452309
(71) Demandeur: Normandie Manutention (Norman), 61120 Vimoutiers (FR)
(72) Inventeur: Torrelli, Didier Louis Eugène Albert, 07130 Saint Peray (FR)
(74) Mandataire: Breese Derambure Majerowicz

(57) **Abrégé**

L'invention concerne un chariot de convoyage d'une partie d'un animal de boucherie le long d'un rail support, ledit chariot comprenant une pièce de sustentation (1) pourvue d'un moyen d'accrochage (2) de la partie et, associé à la pièce de sustentation (1), un dispositif de déplacement (3) de ladite pièce le long du rail, ledit dispositif de déplacement comprenant au moins un galet (6) monté en rotation par rapport à la pièce de sustentation (1), ledit galet comprenant un roulement dont la bague fixe (8) est solidaire de la pièce de sustentation (1) et dont la bague tournante (9) est solidaire d'une chape (10) de roulement sur le rail, ladite chape étant réalisée à base de matériau polymérique, ledit chariot comprenant en outre un moyen d'identification électronique (12) formé d'un transpondeur (13) branché sur une antenne circulaire de communication (14), ledit moyen d'identification étant disposé dans la chape de roulement (10).

## Description

L'invention concerne un chariot de convoyage d'une partie d'un animal de boucherie le long d'un rail support ainsi que des procédés de réalisation d'un galet d'un tel chariot.

Elle trouve particulièrement son application pour le convoyage de carcasses d'animaux de boucherie dans des installations d'abattage ou de découpe des carcasses ou d'une partie de celles-ci.

Dans ce dessein, il est connu d'utiliser des chariots qui sont agencés pour se déplacer le long de rails fixés en hauteur dans les installations, lesdits chariots comprenant une pièce de sustentation pourvue d'un moyen d'accrochage sur lequel la carcasse est fixée pour être convoyée entre les différents postes de travail.

Par ailleurs, il est connu de pourvoir les chariots de moyens d'identification qui permettent d'assurer une traçabilité tant du chariot en lui-même que de la carcasse suspendue.

En particulier, le document WO-98/36645 prévoit un moyen d'identification de type à lecture optique qui, outre sa complexité de réalisation, n'est pas pleinement adapté à l'environnement d'une installation de traitement des carcasses puisque celui-ci n'est pas protégé de son environnement. Par ailleurs, la modularité d'un moyen d'identification de type à lecture optique n'est pas optimale, en particulier du fait de l'impossibilité d'enregistrer des informations dessus.

Pour tenter de surmonter ces limitations, on a proposé d'utiliser des moyens d'identification électronique. Toutefois, les solutions connues à ce jour ne proposent pas une intégration satisfaisante de tels moyens dans le chariot. En effet, les problèmes à résoudre sont nombreux. En premier lieu, l'intégration mécanique doit tenir compte de la fragilité des moyens d'identification électronique mais aussi des contraintes mécaniques importantes subit par le chariot lors de son utilisation. Ensuite, les contraintes électroniques sont également importantes du fait des déplacements du chariot dans un environnement sévère et majoritairement métallique.

En particulier l'intégration de tels moyens dans la pièce de sustentation ou dans le moyen d'accrochage conduit à utiliser des antennes de petit diamètre, ce qui n'est pas favorable pour la fiabilité des échanges d'informations.

L'invention vise à résoudre ces problèmes en proposant un chariot de convoyage dans lequel un moyen d'identification électronique est intégré de sorte à être protégé mécaniquement, tout en pouvant communiquer de façon optimale.

A cet effet et selon un premier aspect, l'invention propose un chariot de convoyage d'une partie d'un animal de boucherie le long d'un rail support, ledit chariot comprenant une pièce de sustentation pourvue d'un moyen d'accrochage de la partie et, associé à la pièce de sustentation, un dispositif de déplacement de ladite pièce le long du rail, ledit dispositif de déplacement comprenant au moins un galet monté en rotation par rapport à la pièce de sustentation, ledit galet comprenant un roulement dont la bague fixe est solidaire de la pièce et dont la bague tournante est solidaire d'une chape de roulement sur le rail, ladite chape étant réalisée à base de matériau polymérique, ledit chariot comprenant en outre un moyen d'identification électronique formé d'un transpondeur branché sur une antenne circulaire de communication, ledit moyen d'identification étant disposé dans la chape de roulement.

Selon un deuxième aspect, l'invention propose un procédé de réalisation d'un galet d'un tel chariot, ledit procédé comprenant une étape de surmoulage de la bague extérieure du roulement par la chape, le moyen d'identification étant également surmoulé dans la chape lors de cette étape.

Selon une réalisation, le chariot de convoyage comprend un insert annulaire enveloppant l'antenne et le transpondeur, ledit insert étant réalisé en deux parties annulaires entre lesquelles l'antenne est disposée.

Selon un troisième aspect, l'invention propose un procédé de réalisation d'un tel galet, ledit procédé comprenant une étape de disposition de l'antenne entre les deux parties de l'insert et une étape de surmoulage de la bague extérieure du roulement par la chape, l'insert étant également surmoulé dans la chape lors de cette dernière étape.

D'autres objets et avantages de l'invention apparaîtront au cours de la description qui suit, faite en référence aux dessins annexés dans lesquels :
- la figure 1 est une représentation en perspective d'un chariot de convoyage selon l'invention ;
- la figure 2 est une vue schématique de face d'un moyen d'identification électronique formé d'une étiquette électronique de type RFID ;
- la figure 3 est une vue en coupe axiale partielle d'un galet d'un chariot selon l'invention ;
- la figure 4 est une vue en perspective du galet de la figure 3.

L'invention concerne un chariot de convoyage d'une partie, notamment d'une carcasse, d'une demi-carcasse ou d'un quartier, d'un animal de boucherie. Ce type de chariot est classiquement utilisé dans des installations d'abatage ou de découpe pour déplacer les carcasses entre les différents postes de travail ou de stockage. Pour ce faire, les installations comprennent des voies de convoyage formées par des rails qui sont fixés en hauteur et sur lesquels les chariots peuvent se déplacer.

De tels chariots de convoyage comprennent une pièce de sustentation 1 pourvue d'un moyen d'accrochage 2 de la carcasse et, associé à la pièce de sustentation 1, un dispositif de déplacement 3 de ladite pièce le long du rail.

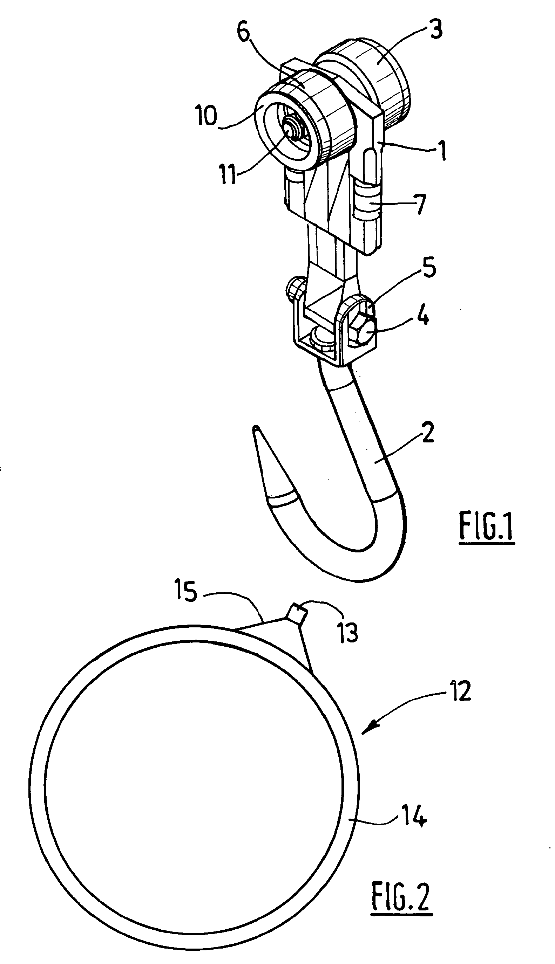

En relation avec la figure 1, on décrit un chariot de convoyage dans lequel le moyen d'accrochage est formé d'un crochet 2 qui est monté en rotation sur la pièce de sustentation 1 au moyen d'un axe 4 boulonné dans un raccord 5 en forme de U. En variante, le moyen d'accrochage peut être formé d'un tinet.

La pièce de sustentation 1 comprend un corps principal qui, comme le crochet 2, est avantageusement réalisé en métal ou en matériau polymérique résistant, ledit corps comprenant deux parties, respectivement inférieure et supérieure, au voisinage desquels respectivement le crochet 2 est monté et le dispositif de déplacement 3 est prévu.

Dans le mode de réalisation représenté, le dispositif de déplacement 3 comprend deux galets 6 monté en rotation par rapport à la pièce de sustentation 1, de part et d'autre de celle-ci. Ce type de dispositif de déplacement est destiné à coopérer avec une voie de convoyage formée de deux rails qui sont espacés et sur la surface supérieure de chacun desquels roule un galet 6, la pièce de sustentation 1 étant disposée entre les deux rails pour pouvoir circuler librement. Pour améliorer cette circulation, un galet de stabilisation 7 est monté pivotant au voisinage de chaque partie latérale de la pièce de sustentation 1, de sorte à permettre le roulement respectif desdits galets sur une surface latérale interne de chaque rail.

L'invention s'applique également à d'autres types de dispositifs de déplacement, notamment comprenant un seul galet 6, ledit galet comprenant un roulement dont la bague fixe 8 est solidaire de la pièce de sustentation 1 et dont la bague tournante 9 est solidaire d'une chape 10 de roulement sur le rail.

Dans le mode de réalisation représenté, un axe 11 est disposé respectivement dans les alésages des bagues intérieures fixes 8 des roulements et dans un orifice pratiqué dans la pièce de sustentation 1, pour permettre, par boulonnage, l'association des bagues intérieures 8 de chaque galet 6 à la pièce de sustentation 1.

La chape 10 est réalisée à base d'un matériau polymérique dont les caractéristiques mécaniques sont adaptées pour permettre un roulement répété sur un rail dans les conditions d'utilisation envisagée (poids, distance de convoyage, vibration, durée de vie...).

En relation avec la figure 2, on décrit un moyen d'identification électronique 12 qui est intégré dans le chariot, ledit moyen comprenant un transpondeur 13 branché sur une antenne circulaire de communication 14 formée d'un bobinage. Ce moyen d'identification, par exemple de type étiquette électronique RFID (Radio Frequency Identification), présente l'avantage de permettre la lecture et l'enregistrement à distance d'informations dans le transpondeur 13 formé d'une puce électronique.

Dans le domaine considéré, les informations peuvent concerner la carcasse et/ou les opérations réalisées sur ladite carcasse. Par exemple des informations concernant la carcasse peuvent être enregistrées lors de l'accrochage de celle-ci au crochet 2 (poids, type de produit, référence,...), puis des informations peuvent être lues et/ou enregistrées tout au long du traitement. Les informations peuvent également concerner le pilotage du déplacement des chariots dans l'installation. Par exemple des informations commandant l'aiguillage des chariots vers les différents postes de travail ou de stockage peuvent être utilisées. Les informations peuvent également concerner le chariot en lui-même. Par exemple des informations concernant la vie du chariot peuvent être enregistrées et/ou lues en vue de la gestion du parc de galets et/ou de la maintenance de ceux-ci.

Selon le mode de réalisation représenté, le moyen d'identification comprend une antenne annulaire métallique 14 sur laquelle est branchée au moyen de deux fils 15 une puce électronique 13. L'antenne 14 et la puce électronique 13 sont choisies en fonction des contraintes d'utilisation, notamment en ce qui concerne les distances d'émission / réception ainsi que les fréquences de communication. De façon connue, ce type de moyen d'identification 12 est destiné à communiquer sans contact avec un appareil fixe spécifique de sorte à assurer la lecture et/ou l'écriture d'informations, lesdits informations pouvant ensuite être utilisées dans le système d'information central de l'installation. De façon préférentielle, le moyen d'identification 12 est de type passif, c'est-à-dire qu'il n'intègre pas de source d'énergie propre, toutefois un moyen d'identification 12 actif peut être envisagé.

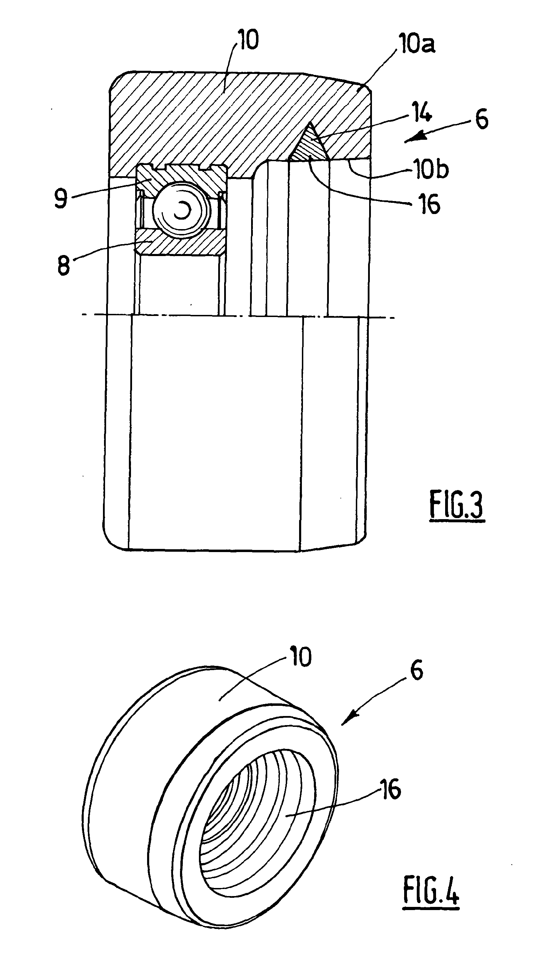

Sur les figures 3 et 4 est représentée la disposition du moyen d'identification dans la chape 10 de roulement du galet. Cette réalisation permet, de part les contraintes mécaniques propres à l'utilisation de la chape 10, de protéger efficacement le moyen d'identification 12 des contraintes générées par l'environnement de l'installation (température, humidité, chocs,...), et ce sans induire de perturbation magnétique du fait de l'utilisation de matériau polymérique pour la chape. Par ailleurs, l'intégration de l'antenne 14 dans la chape 10 permet l'utilisation d'antenne de diamètre important. En outre, l'intégration du moyen d'identification 12 dans la chape 10 est particulièrement avantageuse en terme économique puisque un galet 6 est une pièce de type consommable qui est remplaçable facilement. En outre, la chape 10 étant en rotation, l'intégration de l'antenne dans celle-ci améliore sensiblement les performances de communication, notamment lorsque le chariot est en déplacement. Par ailleurs, la chape 10 roulant sur le rail, elle est à une hauteur prédéterminée qui facilite l'intégration de l'appareil fixe dans l'installation, par exemple au-dessus desdits rails dans une zone où les carcasses ne circulent pas.

Selon la réalisation représentée, un insert annulaire 16 est prévu dans lequel l'antenne 14 et le transpondeur 13 sont enveloppés. L'insert 16, notamment réalisé en matériau polymérique de même type que celui formant la chape 10, présente une section triangulaire.

La chape 10 comprend une saillie annulaire axiale 10a formée à distance du roulement, ladite saillie présentant un alésage 10b légèrement conique. L'insert 16 est disposé dans la saillie 10a de sorte que la base de l'insert 16 affleure sur la surface intérieure de l'alésage 10b, ladite base pouvant être également légèrement conique mais également droite. Cette réalisation permet d'une part d'intégrer le moyen d'identification 12 à distance du roulement de sorte à limiter les perturbations électromagnétiques engendrées par la rotation de celui-ci, et d'autre part de faciliter l'intégration de l'insert 16 dans la chape 10 tout en assurant un bon positionnement de celui-ci. En particulier, lorsque l'insert 16 est surmoulé dans la chape 10, l'insert 16 se positionne par gravité dans le moule sur la partie conique de l'alésage 10b à une hauteur donnée, ce qui facilite le positionnement de l'insert 16 dans le moule.

En variante, on peut prévoir que l'insert 16 enveloppe seulement une partie du moyen d'identification 12. Par exemple plusieurs inserts 16 peuvent être prévus de sorte à envelopper de façon discrète l'antenne 14, un des inserts enveloppant également le transpondeur 13.

L'invention propose également un procédé de réalisation d'un galet 6 d'un chariot, ledit procédé comprenant une étape de surmoulage du moyen d'identification 12 par l'insert 16 puis une étape de surmoulage de la bague extérieure 9 du roulement par la chape 10 dans laquelle l'insert 16 est également surmoulé dans la chape 10.

Ce procédé peut être mis en oeuvre dans un moule comprenant une matrice et deux poinçons, le premier poinçon étant agencé pour permettre le surmoulage du moyen d'identification 12 par l'insert 16, le deuxième poinçon pour permettre le surmoulage de l'ensemble insert 16 ― moyen d'identification 12 - roulement par la chape 10.

Les réalisations avec insert 16 permettent notamment de mieux protéger le moyen d'identification 12, notamment lors du surmoulage de celui-ci par la chape 10, de sorte à faciliter la mise en oeuvre du procédé de fabrication dans des cadences compatibles avec les exigences industrielles. Toutefois, on peut prévoir de surmouler directement le moyen d'identification 12 dans la chape 10 lors de l'étape de surmoulage de la bague extérieure 9 du roulement.

Selon un autre mode de réalisation, l'insert annulaire 16 peut être réalisé en deux parties annulaires entre lesquelles l'antenne 14 est disposée. Selon une réalisation, la face interne d'au moins une partie annulaire comprend des moyens permettant d'immobiliser l'antenne 14 dans l'insert 16.

Le procédé de réalisation d'un galet 6 comprenant un tel insert 16 prévoit une étape de disposition de l'antenne 14 entre les deux parties de l'insert 16 et une étape de surmoulage de la bague extérieure 9 du roulement par la chape 10 dans laquelle l'insert 16 est également surmoulé dans la chape 10.

## Revendications

1. Chariot de convoyage d'une partie d'un animal de boucherie le long d'un rail support, ledit chariot comprenant une pièce de sustentation (1) pourvue d'un moyen d'accrochage (2) de la partie et, associé à la pièce de sustentation (1), un dispositif de déplacement (3) de ladite pièce le long du rail, ledit dispositif de déplacement comprenant au moins un galet (6) monté en rotation par rapport à la pièce de sustentation (1), ledit galet comprenant un roulement dont la bague fixe (8) est solidaire de la pièce de sustentation (1) et dont la bague tournante (9) est solidaire d'une chape (10) de roulement sur le rail, ladite chape étant réalisée à base de matériau polymérique, ledit chariot étant **caractérisé en ce qu'**il comprend en outre un moyen d'identification électronique (12) formé d'un transpondeur (13) branché sur une antenne circulaire de communication (14), ledit moyen d'identification étant disposé dans la chape de roulement (10).

2. Chariot de convoyage, selon la revendication 1, **caractérisé en ce que** le moyen d'identification (12) est formé d'une étiquette électronique de type RFID.

3. Chariot de convoyage selon la revendication 1 ou 2, **caractérisé en ce que** la chape (10) comprend une saillie annulaire axiale (10a) qui est formée à distance du roulement, le moyen d'identification (12) étant disposé dans ladite saillie.

4. Chariot de convoyage selon l'une quelconque des revendications 1 à 3, **caractérisé en ce qu'**il comprend au moins un insert (16) dans lequel au moins une partie du moyen d'identification (12) est enveloppée, l'ensemble formé de l'insert (16) et du moyen d'identification (12) étant disposé dans la chape (10) de roulement.

5. Chariot de convoyage selon la revendication 4, **caractérisé en ce qu'**il comprend un insert annulaire (16) enveloppant l'antenne (14) et le transpondeur (13).

6. Chariot de convoyage selon la revendication 5, **caractérisé en ce que** la chape (10) présente un alésage (10b), l'insert (16) étant disposé sur la circonférence de l'alésage de la chape (10).

7. Chariot de convoyage selon l'une quelconque des revendications 1 à 6, **caractérisé en ce qu'**il comprend deux galets (6) montés en rotation de part et d'autre de la pièce de sustentation (1).

8. Chariot de convoyage selon l'une quelconque des revendications 5 à 7, **caractérisé en ce que** l'insert annulaire (16) est réalisé en deux parties annulaires entre lesquelles l'antenne (14) est disposée.

9. Procédé de réalisation d'un galet d'un chariot selon l'une quelconque des revendications 1 à 7, ledit procédé comprenant une étape de surmoulage de la bague extérieure (9) du roulement par la chape (10), le moyen d'identification (12) étant également surmoulé dans la chape (10) lors de cette étape.

10. Procédé selon la revendication 9 lorsqu'elle dépend de la revendication 4, dans lequel, préalablement à l'étape de surmoulage de la bague extérieure (9), une étape de surmoulage du moyen d'identification (12) par le ou les insert(s) (16) est prévue.

11. Procédé de réalisation d'un galet d'un chariot selon la revendication 8, ledit procédé comprenant une étape de disposition de l'antenne (14) entre les deux parties de l'insert (16) et une étape de surmoulage de la bague extérieure (9) du roulement par la chape (10), l'insert (16) étant également surmoulé dans la chape (10) lors de cette dernière étape.
